# EUROPÄISCHE PATENTANMELDUNG

(11) **EP 2 639 535 A2**
(43) Veröffentlichungstag der Anmeldung: **18.09.2013**
(21) Anmeldenummer: 13155999.9
(22) Anmeldetag: 20.02.2013
(51) Int. Cl.: F26B 13/10, F26B 21/04, F26B 23/00

(54) **Vorrichtung und Verfahren zur Wärmebehandlung von bahnförmigen Warenbahnen**

(30) Priorität: 13.03.2012 DE 102012102096
(71) Anmelder: Brückner Trockentechnik GmbH & Co. KG, 71229 Leonberg (DE)
(72) Erfinder: Christ, Michael, 70191 Stuttgart (DE)
(74) Vertreter: Tetzner, Michael

(57) **Zusammenfassung**

Die erfindungsgemäße Vorrichtung zur Wärmebehandlung von bahnförmigen Bahnen (6) besteht im Wesentlichen aus
i. wenigstens einem Behandlungsabschnitt (I, II), der mehrere aufeinander folgende Behandlungsfelder (1-5) zur Beaufschlagung der Warenbahn mit einem Behandlungsgas (10) umfasst,
ii. Transportmitteln zum Transport der Warenbahn (6) im ausgebreiteten Zustand durch die Behandlungsfelder (1-5),
iii. wenigstens einer Zuluft-Zuführeinrichtung (12) zum Zuführen von Zuluft(15), die mit einigen, vorzugsweise allen Behandlungsfeldern (1-5) des Behandlungsabschnitts in Verbindung steht,
iv. wenigstens einer Abluft-Abführeinrichtung (21, 22) zum Abführen von Abluft (20) aus den Behandlungsfeldern,
v. einer in jedem Behandlungsfeld vorgesehenen Mischeinrichtung, die mit der Zuluft-Zuführeinrichtung (12) zum Zuführen der Zuluft in Verbindung steht und ein Stellglied (18) aufweist, wodurch das im Behandlungsgas (10) vorhandene Verhältnis von Zuluft (15) zu zirkulierender Umluft (16) einstellbar ist und
vi. wenigstens einem zentralen Aufheizsystem (11, 13) zum Aufheizen der Zuluft für den Behandlungsabschnitt, das an die Zuluft-Zuführeinrichtung angeschlossen ist,
vii. wobei die Abluft-Abführeinrichtung (21, 22) zum Abführen der Abluft (20) aus den Behandlungsfeldern an das zentrale Aufheizsystem zur Verwendung der Abluft (20) als Zuluft (15) im zugeordneten Behandlungsabschnitt angeschlossen ist.

## Beschreibung

Die Erfindung betrifft eine Vorrichtung sowie ein Verfahren zur Wärmebehandlung von bahnförmigen Warenbahnen, insbesondere textilen Warenbahnen, mit mehreren, aufeinanderfolgenden Behandlungsfeldern.

Gemäß der DE 100 10 842 B4 besteht die Vorrichtung zur Behandlung von Warenbahnen, insbesondere zur Trocknung von textilen Warenbahnen, im wesentlichen aus einem Gehäuse, wenigstens einem Behandlungsfeld zur Beaufschlagung der Warenbahn mit einem Behandlungsgas, Einrichtungen zum Zuführen von Frischluft in das Gehäuse und Einrichtungen zum Abführen von mit Feuchtigkeit beladener Abluft aus dem Gehäuse. In dem Behandlungsfeld ist ferner eine Mischeinrichtung vorgesehen, die ein oder mehrere Zuströmöffnungen für die zirkulierende Umluft, ein oder mehrere Zuströmöffnungen für die Frischluft sowie eine Abströmöffnung für das Behandlungsgas vorsieht und ferner Einstellmittel aufweist, durch die das im Behandlungsgas vorhandene Verhältnis von Frischluft zu zirkulierender Umluft einstellbar ist.

Zudem ist im Bereich der Mischeinrichtung eine Brennereinrichtung vorgesehen, die ein Flammenleitrohr aufweist und wobei Zuströmöffnungen für die zirkulierende Umluft und die Frischluft vorgesehen sind, die konzentrisch um das Flammenleitrohr angeordnet sind. Mit Hilfe der Mischeinrichtung kann neben einem reinen Umluftbetrieb und einem reinen Frischluftbetrieb auch ein beliebiges Verhältnis von Frischluft zu zirkulierender Umluft eingestellt werden. Auf diese Weise lassen sich sehr gezielt bestimmte Verhältnisse in den einzelnen Behandlungsfeldern in Abhängigkeit ihrer Lage im Gehäuse einstellen.

Aus der DE 26 16 347 A1 ist ferner ein Schwebetrockner zum Trocknen einer Warenbahn bekannt, bei dem das Trocknungsgas im Schwebetrockner durch einen oberen und einen unteren gasbeheizten Brenner aufgeheizt wird. Die beim Trocknen der Warenbahn anfallenden flüchtigen Stoffe werden teilweise abgesaut und einer thermischen Nachverbrennung zugeführt. Ein Teil der dabei entstehenden Abluft wird abgekühlt und in die Atmosphäre entlassen, während ein anderer Teil dem Eintrittsschlitz bzw. Austrittsschlitz des Schwebetrockners vorgeordneten, kleinen Luftkästen zugeführt wird. Da der Schwebetrockner mit Unterdruck betrieben wird, gelangt die Abluft von dort zusammen mit Frischluft in den Schwebetrockner und wird zusammen mit der Umluft in den gasbeheizten Brennern aufgeheizt.

Aufgrund des hohen Energieaufwands bei der Wärmebehandlung von textilen Warenbahnen ist man bestrebt, Maßnahmen zur Energieeinsparung zu ergreifen und gleichzeitig eine Steigerung der Effizienz der Wärmebehandlung zu ermöglichen.

In der EP 1 830 146 A1 wurde diesbezüglich eine Vorrichtung zur Wärmebehandlung von textilen Warenbahnen vorgeschlagen, die im Wesentlichen aus mehreren aufeinander folgenden Behandlungszonen besteht, die als Prallstrahlbelüftungszonen ausgebildet sind sowie Mittel zum Ableiten der Abluft der Prallstrahlbelüftungszonen aufweist. Weiterhin ist eine in Transportrichtung der Warenbahn vorgeschaltete Behandlungszone vorgesehen, die als Durchlüftungszone ausgebildet ist, wobei die Mittel zum Ableiten der Abluft der Prallstrahlbelüftungszonen an die Durchlüftungszone derart angeschlossen sind, dass die Abluft durch die Warenbahn geleitet wird.

In den Prallstrahlbelüftungszonen wird das Behandlungsgas nach der üblichen Erwärmung durch eine Brennereinrichtung auf die Warenbahn geblasen, um diese beispielsweise zu trocknen, wobei das Behandlungsgas dabei die Feuchtigkeit aufnimmt. Indem die Abluft in der vorgeschalteten Durchlüftungszone durch die Warenbahn geleitet wird, kann sich die Abluft bis auf die Kühlgrenztemperatur weiter abkühlen, wobei Energie der Warenbahn zugeführt wird. Dies bewirkt eine Effizienzsteigerung der Trocknungsleistung und eine Energieeinsparung.

Weiterhin ist es bekannt, Abluft einem Wärmerückgewinnungssystem zu zuführen, um beispielsweise die den einzelnen Behandlungsfeldern zuzuführende Frischluft vorzuwärmen.

Bei den bisher bekannten Vorrichtungen zur Wärmebehandlung von bahnförmigen, insbesondere textilen, Warenbahnen wird das Behandlungsgas durch Brennereinrichtungen, die in jedem Behandlungsfeld angeordnet sind, auf die erforderliche Temperatur gebracht. Hierbei musste in Kauf genommen werden, dass die Brennereinrichtungen in verschiedenen Behandlungsfeldern teilweise mit unterschiedlicher Leistung betrieben werden müssen. Außerdem kann die erforderliche Wärmeleistung, insbesondere durch die Eigenschaften der Warenbahn und/oder einem sich ändernden Verhältnis von Zuluft und zirkulierender Umluft, variieren, sodass die Brennereinrichtungen nicht immer im optimalen Betriebspunkt betrieben werden können und dadurch oftmals ihre volle Effizienz nicht ausschöpfen können.

In der EP-A-2 354 740 wurde daher als weitere Maßnahme zur Energieeinsparung ein zentrales Aufheizsystem zum Einstellen der Temperatur des Behandlungsgases vorgesehen, das über eine Ringleitung mit mehreren Behandlungsfeldern in Verbindung steht. Dadurch kann die für die Einstellung der Temperatur des Behandlungsgases erforderliche Wärme zentral erzeugt werden und jede Behandlungseinrichtung nimmt nur die erforderliche Wärmemenge ab, wobei die nicht abgenommene Wärmemenge über die Ringleitung zurückgeführt wird. Auf diese Weise kann das zentrale Aufheizsystem, insbesondere eine zentrale Brennkammer, immer im optimalen Regelbereich gefahren werden, wodurch ein vollständiger Ausbrand und eine bessere Energieausnutzung gewährleistet wird. Des Weiteren ergibt sich durch das Ersetzen der Vielzahl von Brennern (in den einzelnen Behandlungsfeldern) durch ein zentrales Aufheizsystem eine deutliche Kostenersparnis.

Bei der Nutzung solcher Vorrichtungen zur Wärmebehandlung in der Textilindustrie entstehen enorme Abgasmengen, die zudem mit Schadstoffen belastet sind. Man ist daher bemüht, durch entsprechende Reinigungsverfahren die in die Atmosphäre ausgestoßene Menge an Schadstoffen zu reduzieren.

Ausgehend von der EP-A-2 345 740 lag daher der vorliegenden Erfindung die Aufgabe zugrunde, die Schadstoffreduzierung zu verbessern und gleichzeitig den hierfür erforderlichen Aufwand zu reduzieren.

Erfindungsgemäß wird diese Aufgabe durch die Merkmale der Ansprüche 1 und 9 gelöst.

Die erfindungsgemäße Vorrichtung zur Wärmebehandlung von bahnförmigen Bahnen besteht im Wesentlichen aus
- wenigstens einem Behandlungsabschnitt, der mehrere aufeinander folgende Behandlungsfelder zur Beaufschlagung der Warenbahn mit einem Behandlungsgas umfasst,
- Transportmitteln zum Transport der Warenbahn im ausgebreiteten Zustand durch die Behandlungsfelder,
- wenigstens einer Zuluft-Zuführeinrichtung zum Zuführen von Zuluft, die mit einigen, vorzugsweise allen Behandlungsfeldern in Verbindung steht,
- wenigstens einer Abluft-Abführeinrichtung zum Abführen von Abluft aus den Behandlungsfeldern des Behandlungsabschnitts,
- einer in jedem Behandlungsfeld vorgesehenen Mischeinrichtung, die mit der Zuluft-Zuführeinrichtung zum Zuführen der Zuluft in Verbindung steht und ein Stellglied aufweist, wodurch das im Behandlungsgas vorhandene Verhältnis von Zuluft zu zirkulierender Umluft einstellbar ist und
- wenigstens einem zentralen Aufheizsystem zum Aufheizen der Zuluft für den Behandlungsabschnitt, das an die Zuluft-Zuführeinrichtung angeschlossen ist,
- wobei die Abluft-Abführeinrichtungen zum Abführen der Abluft aus den Behandlungsfeldern an das zentrale Aufheizsystem zur Verwendung der Abluft als Zuluft im zugeordneten Behandlungsabschnitt angeschlossen ist.

Das zugehörige erfindungsgemäße Verfahren zur Wärmebehandlung von bahnförmigen Warenbahnen besteht darin, dass
- die Warenbahn durch wenigstens einen Behandlungsabschnitt transportiert wird, wobei der Behandlungsabschnitt mehrere aufeinander folgende Behandlungsfelder aufweist, in denen die Warenbahn mit einem Behandlungsgas beaufschlagt wird,
- einigen, vorzugsweise allen Behandlungsfeldern des Behandlungsabschnitts über eine Zuluft-Zuführeinrichtung Zuluft zugeführt wird, die in einem zentralen Aufheizsystem aufgeheizt wird,
- die Abluft aus den Behandlungsfeldern über eine Abluft-Abführeinrichtung abgeführt wird und
- das Behandlungsgas in jedem Behandlungsfeld durch Mischen von Zuluft mit zirkulierender Umluft eingestellt wird,
- wobei die Abluft der Abluft-Abführeinrichtung dem zentralen Aufheizsystem zum weiteren Aufheizen und zur anschließenden Verwendung als Zuluft im zugeordneten Behandlungsabschnitt zugeführt wird.

Durch die Nutzung der Abluft als Zuluft in einem Behandlungsabschnitte wird zum einen die vor dem Abluftkamin zur reinigende Abluftmenge um etwa die Hälfte reduziert und außerdem kann durch das bereits relativ hohe Temperaturniveau des Abgases Energie im entsprechenden Aufheizsystem eingespart werden, da eine ansonsten entsprechend zuzuführende Frischluftmenge nicht erst auf dieses Temperaturniveau aufgeheizt werden muss. Die Erfindung macht daher eine direkte Wärmenutzung möglich, sodass Energie zum Aufheizen der Frischluft auf die erforderliche Prozesstemperatur eingespart werden kann.

Neben der Reduzierung der Abgasmenge können zudem zumindest ein Teil der im Abgas mitgeführten Schadstoffe durch Verbrennung im Aufheizsystem eliminiert bzw. reduziert werden. Da der Aufwand für die Abgasreinigung in etwa proportional zur Menge des Abgases liegt, kann somit der Aufwand auf etwa die Hälfte reduziert werden.

Weitere Vorteile und Ausgestaltungen der Erfindung sind Gegenstand der Unteransprüche.

Gemäß einer weiteren Ausgestaltung besteht die Vorrichtung zur Wärmebehandlung von bahnförmigen Bahnen im Wesentlichen aus
- wenigstens einem ersten Behandlungsabschnitt und einem nachfolgenden, zweiten Behandlungsabschnitt, wobei die beiden Behandlungsabschnitte jeweils mehrere aufeinander folgende Behandlungsfelder zur Beaufschlagung der Warenbahn mit einem Behandlungsgas umfassen,
- Transportmitteln zum Transport der Warenbahn im ausgebreiteten Zustand durch die Behandlungsfelder,
- einer ersten Zuluft-Zuführeinrichtung zum Zuführen von Zuluft, die mit einigen, vorzugsweise allen Behandlungsfeldern des ersten Behandlungsabschnitts in Verbindung steht,
- einer zweiten Zuluft-Zuführeinrichtung zum Zuführen von Zuluft, die mit einigen, vorzugsweise allen Behandlungsfeldern des zweiten Behandlungsabschnitts in Verbindung steht,
- einer ersten Abluft-Abführeinrichtung zum Abführen von Abluft aus den Behandlungsfeldern des ersten Behandlungsabschnitts,
- einer zweiten Abluft-Abführeinrichtung zum Abführen von Abluft aus den Behandlungsfeldern des zweiten Behandlungsabschnitts,
- einer in jedem Behandlungsfeld des ersten Behandlungsabschnitts vorgesehenen Mischeinrichtung, die mit der ersten Zuluft-Zuführeinrichtung zum Zuführen der Zuluft in Verbindung steht und ein Stellglied aufweist, wodurch das im Behandlungsgas vorhandene Verhältnis von Zuluft zu zirkulierender Umluft einstellbar ist,
- einer in jedem Behandlungsfeld des zweiten Behandlungsabschnitts vorgesehenen Mischeinrichtung, die mit der zweiten Zuluft-Zuführeinrichtung zum Zuführen der Zuluft in Verbindung steht und ein Stellglied aufweist, wodurch das im Behandlungsgas vorhandene Verhältnis von Zuluft zu zirkulierender Umluft einstellbar ist,
- einem ersten zentralen Aufheizsystem zum Aufheizen der Zuluft für den ersten Behandlungsabschnitt, das an die erste Zuluft-Zuführeinrichtung angeschlossen ist und
- einem zweiten zentralen Aufheizsystem zum Aufheizen der Zuluft für den zweiten Behandlungsabschnitt, das an die zweite Zuluft-Zuführeinrichtung angeschlossen ist,
- wobei eine der beiden Abluft-Abführeinrichtungen zum Abführen der Abluft aus den Behandlungsfeldern einer der beiden Behandlungsabschnitte an eines der beiden zentralen Aufheizsysteme zur Verwendung der Abluft als Zuluft im zugeordneten Behandlungsabschnitt angeschlossen ist.

Die zugehörige, weitere Ausgestaltung des erfindungsgemäßen Verfahrens zur Wärmebehandlung von bahnförmigen Warenbahnen besteht darin, dass
- die Warenbahn durch wenigstens einen ersten Behandlungsabschnitt und einen nachfolgenden, zweiten Behandlungsabschnitt transportiert wird, wobei die beiden Behandlungsabschnitte jeweils mehrere aufeinander folgende Behandlungsfelder aufweisen, in denen die Warenbahn mit einem Behandlungsgas beaufschlagt wird,
- einigen, vorzugsweise allen Behandlungsfeldern des ersten Behandlungsabschnitts über eine erste Zuluft-Zuführeinrichtung Zuluft zugeführt wird, die in einem ersten zentralen Aufheizsystem aufgeheizt wird,
- einigen, vorzugsweise allen Behandlungsfeldern des zweiten Behandlungsabschnitts über eine zweite Zuluft-Zuführeinrichtung Zuluft zugeführt wird, die in einem zweiten zentralen Aufheizsystem aufgeheizt wird,
- die Abluft aus den Behandlungsfeldern des ersten Behandlungsabschnitts über eine erste Abluft-Abführeinrichtung abgeführt wird,
- die Abluft aus den Behandlungsfeldern des zweiten Behandlungsabschnitts über eine zweite Abluft-Abführeinrichtung abgeführt wird,
- das Behandlungsgas in jedem Behandlungsfeld durch Mischen von Zuluft mit zirkulierender Umluft eingestellt wird,
- wobei die Abluft einer der beiden Abluft-Abführeinrichtungen einem der beiden zentralen Aufheizsysteme zum weiteren Aufheizen und zur anschließenden Verwendung als Zuluft im zugeordneten Behandlungsabschnitt zugeführt wird.

Gemäß einer ersten Betriebsart ist die zweite Abluft-Abführeinrichtung zum Abführen der Abluft aus den Behandlungsfeldern des zweiten Behandlungsabschnitts an das erste zentrale Aufheizsystem zur Verwendung der Abluft als Zuluft im ersten Behandlungsabschnitt angeschlossen.

In einer zweiten Betriebsart der Erfindung ist die erste Abluft-Abführeinrichtung zum Abführen der Abluft aus den Behandlungsfeldern des ersten Behandlungsabschnittes an das zweite zentrale Aufheizsystem zur Verwendung der Abluft als Zuluft im zweiten Behandlungsabschnitt angeschlossen.

Vorzugsweise ist die Vorrichtung mit geeigneten Stell- bzw. Regelgliedern ausgestattet, um wahlweise einen Betrieb gemäß dem ersten Ausführungsbeispiel bzw. dem zweiten Ausführungsbeispiel zu ermöglichen.

Weiterhin kann vorgesehen werden, dass das erste zentrale Aufheizsystem an eine erste Frischluftzuführleitung angeschlossen ist, hierbei ist es vorteilhaft, wenn das erste zentrale Aufheizsystem weiterhin einen ersten indirekten Wärmetauscher vorsieht, der zum indirekten Aufwärmen von Frischluft mit der Abluft des ersten Behandlungsabschnitts mit der ersten Frischzuführleitung und der ersten Abluft-Abführleitung in Verbindung steht.

Gemäß einem weiteren Ausführungsbeispiel der Erfindung ist das zweite zentrale Aufheizsystem an die erste Zuluft-Zuführeinrichtung angeschlossen. Weiterhin ist die erste und/oder zweite Abluft-Abführleitung über einen ggf. vorhandenen Abluftwärmetauscher und einen ggf. vorhandenen Schadstoff- und/oder Staubfilter an einen Abluftkamin angeschlossen.

Damit die in der Abluft enthaltene Wärmeenergie möglichst vollständig im ersten bzw. zweiten zentralen Aufheizsystem genutzt werden kann, ist vorgesehen, dass die Abluft aus den entsprechenden Behandlungsfeldern über die entsprechende Abluft-Abführeinrichtung unter Umgehung eines Wärmetauschers an das entsprechende Aufheizsystem zugeführt wird.

Weitere Vorteile und Ausgestaltungen der Erfindung werden anhand der folgenden Beschreibung und der Zeichnung näher erläutert.

In der Zeichnung zeigen
- Fig. 1: ein schematisches Schaltbild eines ersten Ausführungsbeispiels der erfindungsgemäßen Vorrichtung zur Wärmebehandlung von textilen Warenbahnen in einer ersten Betriebsart,
- Fig. 2: ein schematisches Schaltbild des ersten Ausführungsbeispiels der erfindungsgemäßen Vorrichtung zur Wärmebehandlung von textilen Warenbahnen in einer zweiten Betriebsart,
- Fig.3: ein schematisches Schaltbild eines zweiten Ausführungsbeispiels der erfindungsgemäßen Vorrichtung zur Wärmebehandlung von textilen Warenbahnen und
- Fig. 4: eine vergrößerte Darstellung eines Halbfeldes.

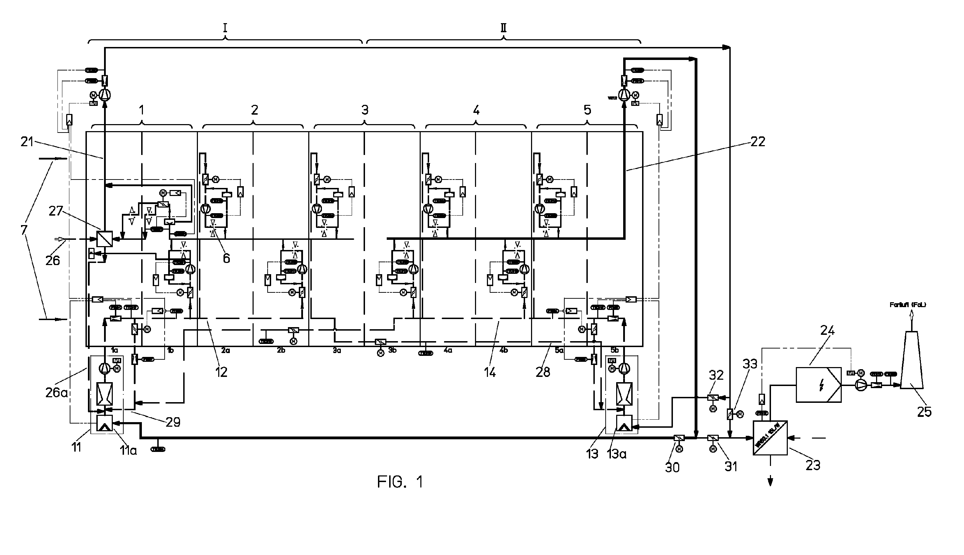

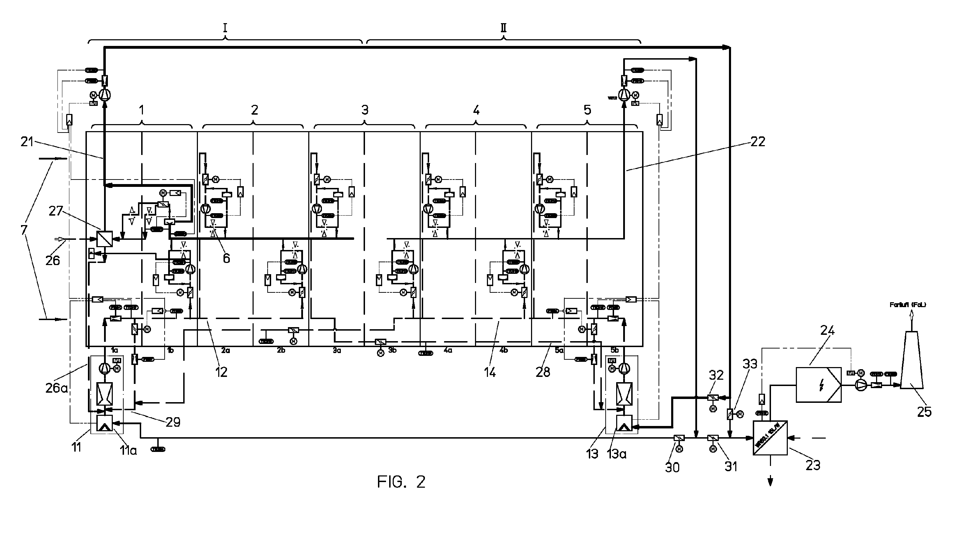

In den Fig. 1 und 2 ist das erste Ausführungsbeispiel einer Vorrichtung zur Wärmebehandlung von textilen Warenbahnen dargestellt, wobei es sich bei den Warenbahnen beispielsweise um so genannte Nassfixierungen, Fig. 1 und Trockenfixierungen, Fig. 2 von textilen Trägern handeln kann. Im Rahmen der Erfindung kommen aber auch andere, nicht textile, bahnförmige Warenbahnen in Betracht.

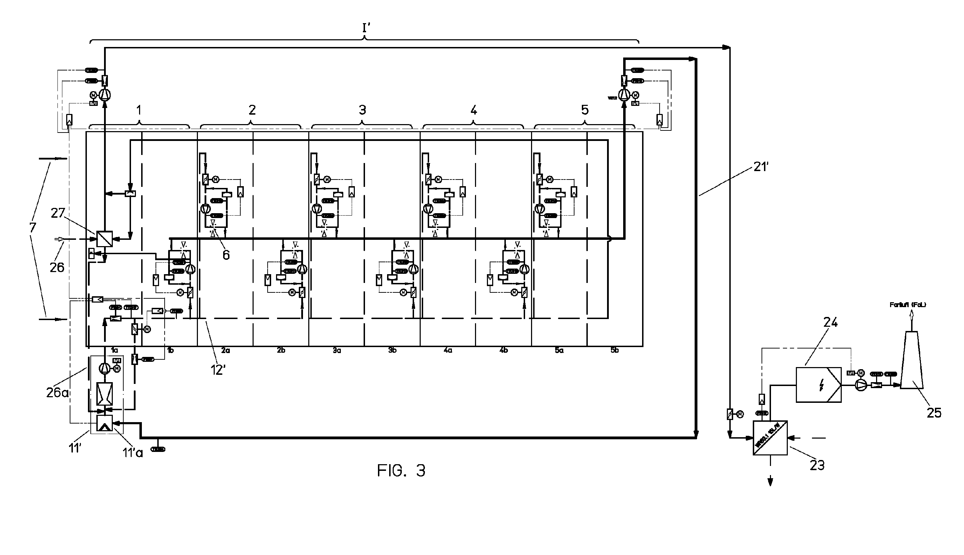

Die Vorrichtung besteht aus mehreren aufeinanderfolgenden Behandlungsfeldern 1 bis 5, die jeweils in Halbfelder 1a, 1b, 2a, 2b, 3a, 3b, 4a, 4b, 5a und 5b aufgeteilt sind, wobei im Rahmen der Erfindung selbstverständlich auch mehr oder weniger Behandlungsfelder vorgesehen werden können. In Fig. 3 ist eines der Halbfelder vergrößert dargestellt.

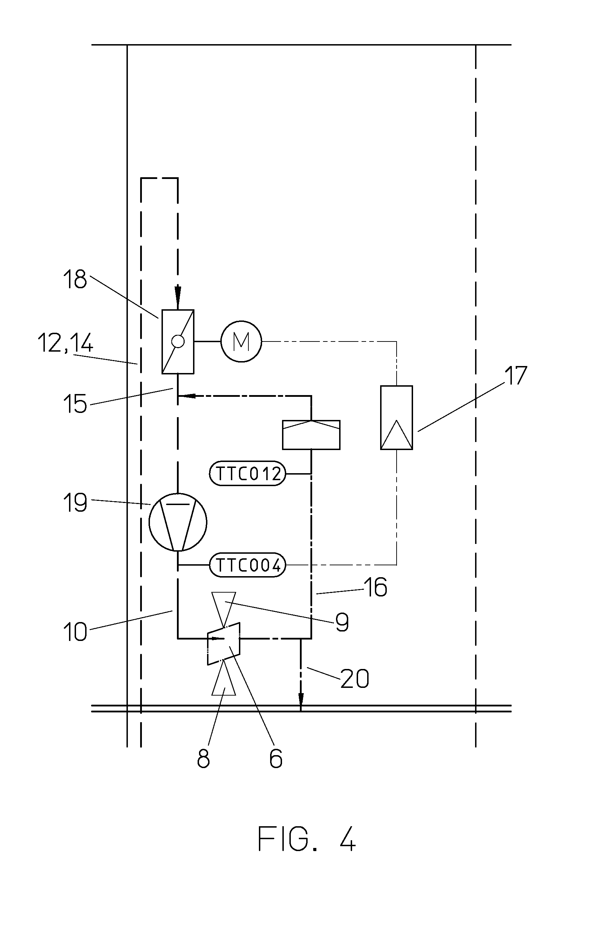

Eine textile Warenbahn 6 wird durch lediglich mit Pfeilen schematisch angedeuteten Transportmitteln 7 im ausgebreiteten Zustand durch die Behandlungsfelder transportiert. In den Behandlungsfeldern sind Prallstrahlbelüftungszonen mit unteren und oberen Düsensystemen 8, 9 (siehe Fig. 4) ausgebildet, die sich über die gesamte Breite der Warenbahn 6 erstrecken, sodass die Warenbahn sowohl von oben als auch von unten mit einem Behandlungsgas 10 beaufschlagt wird.

Die Halbfelder 1a, 1b, 2a, 2b und 3a sind einem ersten Behandlungsabschnitt I und die Halbfelder 3b, 4a, 4b, 5a und 5b einem zweiten Behandlungsabschnitt II zugeordnet. Der erste Behandlungsabschnitt I weist ein erstes zentrales Aufheizsystem 11 zum Aufheizen von Zuluft für den ersten Behandlungsabschnitt 1 auf, wobei die aufgeheizte Zuluft über eine an das erste zentrale Aufheizsystem 11 angeschlossene erste Zuluft-Zuführeinrichtung 12 den Halbfeldern 1b bis 3a zugeführt wird. In entsprechender Weise ist im zweiten Behandlungsabschnitt II ein zweites zentrales Aufheizsystem 13 zum Aufheizen der Zuluft für den zweiten Behandlungsabschnitt II vorgesehen, das an eine zweite Zuluft-Zuführeinrichtung 14 zum Zuführen der Zuluft zu den Halbfeldern 3b, 4a, 4b und 5a vorgesehen.

Das Halbfeld 1a am Anfang der Vorrichtung stellt das sogenannte Einlauffeld dar, welches im Gegensatz zu den anderen Belüftungsfeldern, insbesondere als Durchlüftungszone ausgebildet werden kann. Dabei kann insbesondere die aufkonzentrierte Abluft aus den in Transportrichtung folgenden Halbfeldern genutzt werden.

Das letzte Halbfeld 5b im zweiten Behandlungsabschnitt II stellt das Auslauffeld dar.

Im Folgenden wird anhand der Fig. 4 näher erläutert, wie das für die Beaufschlagung der Warenbahn 6 verwendete Behandlungsgas 10 gebildet wird.

Das Behandlungsgas 10 setzt sich aus einem bestimmten Verhältnis von Zuluft 15 und zirkulierender Umluft 16 zusammen, wobei die Zuluft 15 im ersten bzw. zweiten zentralen Aufheizsystem 11, 13 aufgeheizt und über die erste bzw. zweite Zuluft-Zuführeinrichtung 12, 14 den einzelnen Behandlungsfeldern bzw. Halbfeldern zugeführt wird. Über einen temperaturgeregelten Regler 17 wird eine ein Stellglied 18 aufweisende Mischeinrichtung angesteuert, um die Temperatur des Behandlungsgases 10 durch Zumischung von heißer Zuluft 15 auf einem vorgegebenen Niveau von beispielsweise 200°C zu halten. Je nach Art der Behandlung können in den einzelnen Behandlungsfeldern auch unterschiedliche Temperaturen eingestellt werden. Das Behandlungsgas 10 wird über ein oder mehrere Ventilatoren 19 über die unteren und oberen Düsensysteme 8 und 9 auf die Warenbahn 6 aufgebracht. Um die Behandlungsgasmenge 10 konstant zu halten wird die dem Halbfeld zugeführte Menge an Zuluft 15 durch eine entsprechende Menge an abzuführender Abluft 20 ausgeglichen.

Die Abluft 20 wird in den beiden Behandlungsabschnitten I und II über eine erste Abluft-Abführeinrichtung 21 bzw. eine zweite Abluft-Abführeinrichtung 22 abgeführt.

Im Ausführungsbeispiel gemäß Fig. 1 ist die zweite Abluft-Abführeinrichtung 22 zum Abführen der Abluft 20 aus den Behandlungsfeldern des zweiten Behandlungsabschnitts II an das erste zentrale Aufheizsystem 11 zur Verwendung der Abluft 20 als Zuluft 15 im ersten Behandlungsabschnitt I angeschlossen. Die gesamte zweite Abluft-Abführeinrichtung 22 ist zur Erleichterung des Verständnisses fett hervorgehoben.

Die erste Abluft-Abführeinrichtung 21 ist vorzugsweise an einen indirekten Abluftwärmetauscher 23 angeschlossen, um die Restwärme zu nutzen. Die Abluft wird anschließend einem Schadstoff- und/oder Staubfilter zugeführt, bevor sie über einen Abluftkamin 25 in die Atmosphäre gelangt.

Die beiden zentralen Aufheizsysteme 11, 13 weisen jeweils einen Brenner 11a bzw. 13a auf, der vorzugsweise als Diffusionsbrenner ausgebildet ist. Alternativ ist auch ein Gebläsebrenner mit separater Luftführung möglich.

Das über die zweite Abluft-Abführeinrichtung 22 dem ersten zentralen Aufheizsystem 11 zugeführte Abgas wird im Brenner 11a als Verbrennungsluft genutzt. Da im ersten Behandlungsabschnitt I meist mehr Zuluft 15 benötigt wird, als durch die im zweiten Behandlungsabschnitt II abgezogene Abluft bereitgestellt werden kann, ist es erforderlich, dass dem ersten zentralen Aufheizsystem 11 zusätzlich Frischluft 26a über eine erste Frischluftzuführleitung zugeführt wird, die zweckmäßigerweise in einem indirekten Wärmetauscher 27 mit der Abluft des ersten Behandlungsabschnittes I aufgeheizt wird, bevor es nach dem Brenner 11 a mit dem zugeführten und zwischenzeitlich aufgeheizten Abgas vermischt und als Zuluft der ersten Zuluft-Zuführeinrichtung 12 zugeführt wird.

Die Zuluft-Zuführeinrichtung 12 ist über Zuführmittel 28 mit dem zweiten Aufheizsystem 13 verbunden und versorgt dieses mit der entsprechenden Verbrennungsluft.

In entsprechender Weise wird überschüssige Zuluft des zweiten Behandlungsabschnittes II über Zuführmittel 29 dem ersten zentralen Aufheizsystem zugeführt. Auf diese Weise wird ein entsprechender Kreislauf der Zuluft gewährleistet.

Die in Fig. 1 dargestellte Betriebsweise der Vorrichtung ist vor allem für den Anwendung vorgesehen, bei der im ersten Behandlungsabschnitt I getrocknet und im zweiten Behandlungsabschnitt II fixiert wird. Bei dieser Betriebsweise ist die Abluft des ersten Behandlungsabschnittes mit einer hohen Feuchtigkeit beladen und daher als Verbrennungsgas in einem der beiden zentralen Aufheizsysteme eher ungeeignet. Das Abgas des zweiten Behandlungsabschnittes II enthält hingegen lediglich einen geringen Feuchteanteil und kann daher im ersten Behandlungsabschnitt I zur Aufkonzentrierung beim Trocknen mit Feuchte verwendet werden. Außerdem hat sich gezeigt, dass sich flüchtige Bestandteile, wie organische Kohlenwasserstoffe, insbesondere Methanol und Formaldehyd, im zweiten Behandlungsabschnitt verflüchtigen und mit dem Abgas abgeführt werden. In dem dieses Abgas im ersten zentralen Aufheizsystem als Verbrennungsluft verwendet wird, werden die im Abgas enthaltenen Schadstoffe zumindest teilweise verbrannt und damit auf einfache Art und Weise eliminiert.

Es ist jedoch auch eine Betriebsweise der Vorrichtung denkbar, bei der die Warenbahn 6 bereits im trockenen Zustand zugeführt wird. In diesem Fall enthält die Abluft des ersten Behandlungsabschnittes I wiederum nur einen relativ geringen Feuchteanteil sowie die dort bereits verflüchtigen Schadstoffe. Dieses Abgas kann daher idealerweise als Verbrennungsabgas im zweiten zentralen Aufheizsystem 13 verwendet werden. Diese Führung der Abluft des ersten Behandlungsabschnittes I ist in Fig. 2 wieder fett hervorgehoben.

Um wahlweise die Zuführung der Abluft gemäß Fig. 1 bzw. Fig.2 zu gewährleisten sind Stell- bzw. Regelglieder 30, 31, 32 und 33 vorgesehen. Im Ausführungsbeispiel der Fig. 1 sind die Stell- und Regelglieder 31 und 32 geschlossen, um die Abluft des ersten Behandlungsabschnittes I über die erste Abluft-Abführeinrichtung 22 dem Wärmetauscher 23 zuzuführen und die Abluft des zweiten Behandlungsabschnittes II zum ersten zentralen Aufheizsystem 11 zu leiten. Bei der Anwendung gemäß Fig. 2 sind hingegen die Stell- bzw. Regelglieder 30 und 33 geschlossen, sodass die Abluft des ersten Behandlungsabschnittes I dem zweiten zentralen Aufheizsystem 13 und die Abluft des zweiten Behandlungsabschnittes II dem Wärmetauscher 23 zugeführt wird. Die Verbrennungsluftversorgung des ersten zentralen Aufheizsystems 11 erfolgt über die Frischluft 26a.

Fig. 3 zeigt ein zweites Ausführungsbeispiel einer Vorrichtung zur Wärmebehandlung von bahnförmigen Warenbahnen 6. Es unterscheidet sich vom ersten Ausführungsbeispiel vor allem dadurch, dass lediglich ein Behandlungsabschnitt I' vorgesehen ist, der alle Behandlungsabschnitte 1 bis 5 umfasst. Ein weiterer Unterschied besteht darin, dass lediglich ein zentrales Aufheizsystem 11' zum Aufheizen der Zuluft für alle Behandlungsfelder 1 bis 5 sowie lediglich eine Abluft-Abführeinrichtung 21' zum Abführen von Abluft aus den Behandlungsfeldern vorgesehen ist. Im Übrigen stimmt das zweite Ausführungsbeispiel mit dem ersten Ausführungsbeispiel gemäß den Fig. 1 und 2 weitgehend überein, sodass dieselben Bezugszeichen verwendet worden sind. Auch die Halbfelder sind in übereinstimmender Weise gemäß Fig. 4 aufgebaut.

Lediglich der indirekte Wärmetauscher 27 zum Aufwärmen der Frischluft 26a wird nicht mit Abluft sondern mit der überschüssigen Zuluft betrieben, sodass die Zuluft-Zuführeinrichtung 12' an seinem dem zentralen Aufheizsystem 11' entfernten Ende an den indirekten Wärmetauscher 27 angeschlossen ist. Die im Wärmetauscher 27 abgekühlte Zuluft wird dann ggf. in einem weiteren Wärmetauscher 23 weiter abgekühlt und in einem Schadstoff-/Staubfilter 24 gereinigt bevor es über den Abluftkamin 25 in die Atmosphäre entlassen wird.

Das in Fig. 3 dargstellte zweite Ausführungsbeispiel kommt insbesondere für folgende Anwendungen in Betracht: Non Wovens, Beschichtung von textilen Trägern.

Durch den Betrieb eines zentralen Aufheizsystems für mehrere Behandlungsfelder kann der erforderliche Regelbereich deutlich reduziert werden und so ein erheblich besseres Ausbrandverhalten gegenüber in jedem Behandlungsfeld vorgesehenen Einzelbrennern erzielt werden. Gegenüber herkömmlichen Anlagen erfolgt bei diesem System beim Eintritt der Warenbahn in die Vorrichtung eine gezielte Durchströmung der Ware mit heißer Abluft, welche die Warenbahn und das in ihr enthaltene Wasser schneller aufwärmt und die Abluft durch Wasseraufnahme aus der Ware zusätzlich befeuchtet. Dadurch wird die Abluft auf ein tieferes Temperaturniveau gebracht, was zugleich eine effektivere Nutzung der Energie im Prozess bedeutet. Durch die beiden zentralen Aufheizsysteme, die dauerhaft im Betrieb sind kann die Zuluft außerdem auf konstanter Temperatur gehalten werden.

Durch die Nutzung der Abluft aus einem der beiden Behandlungsabschnitte als Verbrennungsluft im zentralen Aufheizsystem des anderen Behandlungsabschnittes kann außerdem die aus dem System herauszuführende Abluftmenge um etwa die Hälfte reduziert werden. Nachdem zudem ein Teil der Schadstoffe durch die Verbrennung eliminiert wird, kann der Schadstoff- und/oder Staubfilter 24 entsprechend kleiner dimensioniert werden.

## Patentansprüche

1. Vorrichtung zur Wärmebehandlung von bahnförmigen Warenbahnen (6) mit
- wenigstens einem Behandlungsabschnitt (I, II; I'), der mehrere aufeinander folgende Behandlungsfelder (1-5) zur Beaufschlagung der Warenbahn (6) mit einem Behandlungsgas (10) umfasst,
- Transportmitteln (7) zum Transport der Warenbahn (6) im ausgebreiteten Zustand durch die Behandlungsfelder (1-5),
- wenigstens einer Zuluft-Zuführeinrichtung (12) zum Zuführen von Zuluft (15), die mit einigen, vorzugsweise allen Behandlungsfeldern (1-5) in Verbindung steht,
- wenigstens einer Abluft-Abführeinrichtung (21, 22; 21') zum Abführen von Abluft (20) aus den Behandlungsfeldern (1-3),
- einer in jedem Behandlungsfeld vorgesehenen Mischeinrichtung, die mit der Zuluft-Zuführeinrichtung (12) zum Zuführen der Zuluft in Verbindung steht und ein Stellglied (18) aufweist, wodurch das im Behandlungsgas (10) vorhandene Verhältnis von Zuluft (15) zu zirkulierender Umluft (16) einstellbar ist und
- wenigstens einem zentralen Aufheizsystem (11, 13;11') zum Aufheizen der Zuluft (15) für den Behandlungsabschnitt (I), das an die Zuluft-Zuführeinrichtung (12) angeschlossen ist,
**dadurch gekennzeichnet, dass** die Abluft-Abführeinrichtungen (21, 22; 21') zum Abführen der Abluft (20) aus den Behandlungsfeldern an das zentrale Aufheizsystem zur Verwendung der Abluft (20) als Zuluft (15) im zugeordneten Behandlungsabschnitt angeschlossen ist.

2. Vorrichtung nach Anspruch 1 mit
- wenigstens einem ersten Behandlungsabschnitt (I) und einem nachfolgenden, zweiten Behandlungsabschnitt (II), wobei die beiden Behandlungsabschnitte jeweils mehrere aufeinander folgende Behandlungsfelder (1-5) zur Beaufschlagung der Warenbahn (6) mit einem Behandlungsgas (10) umfassen,
- einer ersten Zuluft-Zuführeinrichtung (12) zum Zuführen von Zuluft (15), die mit einigen, vorzugsweise allen Behandlungsfeldern (1-3) des ersten Behandlungsabschnitts (I) in Verbindung steht,
- einer zweiten Zuluft-Zuführeinrichtung (14) zum Zuführen von Zuluft (15), die mit einigen, vorzugsweise allen Behandlungsfeldern (3-5) des zweiten Behandlungsabschnitts (II) in Verbindung steht,
- einer ersten Abluft-Abführeinrichtung (21) zum Abführen von Abluft (20) aus den Behandlungsfeldern (1-3) des ersten Behandlungsabschnitts (I),
- einer zweiten Abluft-Abführeinrichtung (22) zum Abführen von Abluft (20) aus den Behandlungsfeldern (3-5) des zweiten Behandlungsabschnitts (II),
- einer in jedem Behandlungsfeld des ersten Behandlungsabschnitts (I) vorgesehenen Mischeinrichtung, die mit der ersten Zuluft-Zuführeinrichtung (12) zum Zuführen der Zuluft in Verbindung steht und ein Stellglied (18) aufweist, wodurch das im Behandlungsgas (10) vorhandene Verhältnis von Zuluft (15) zu zirkulierender Umluft (16) einstellbar ist,
- einer in jedem Behandlungsfeld des zweiten Behandlungsabschnitts (II) vorgesehenen Mischeinrichtung, die mit der zweiten Zuluft-Zuführeinrichtung (14) zum Zuführen der Zuluft in Verbindung steht und ein Stellglied (18) aufweist, wodurch das im Behandlungsgas (10) vorhandene Verhältnis von Zuluft (15) zu zirkulierender Umluft (16) einstellbar ist,
- einem ersten zentralen Aufheizsystem (11) zum Aufheizen der Zuluft (15) für den ersten Behandlungsabschnitt (I), das an die erste Zuluft-Zuführeinrichtung (12) angeschlossen ist und
- einem zweiten zentralen Aufheizsystem (14) zum Aufheizen der Zuluft (15) für den zweiten Behandlungsabschnitt, das an die zweite Zuluft-Zuführeinrichtung (14) angeschlossen ist,
- wobei eine der beiden Abluft-Abführeinrichtungen (21, 22) zum Abführen der Abluft (20) aus den Behandlungsfeldern einer der beiden Behandlungsabschnitte (I, II) an eines der beiden zentralen Aufheizsysteme zur Verwendung der Abluft (20) als Zuluft (15) im zugeordneten Behandlungsabschnitt angeschlossen ist.

3. Vorrichtung nach Anspruch 2, **dadurch gekennzeichnet, dass** die erste Abluft-Abführeinrichtung (21) zum Abführen der Abluft (20) aus den Behandlungsfeldern des ersten Behandlungsabschnitts (I) an das zweite zentrale Aufheizsystem zur Verwendung der Abluft (20) als Zuluft (15) im zweiten Behandlungsabschnitt (I) angeschlossen ist.

4. Vorrichtung nach Anspruch 2, **dadurch gekennzeichnet, dass** die zweite Abluft-Abführeinrichtung (22) zum Abführen der Abluft (20) aus den Behandlungsfeldern des zweiten Behandlungsabschnitts (II) an das erste zentrale Aufheizsystem (11) zur Verwendung der Abluft (20) als Zuluft (15) im ersten Behandlungsabschnitt (I) angeschlossen ist.

5. Vorrichtung nach Anspruch 4, **dadurch gekennzeichnet, dass** das erste zentrale Aufheizsystem (11) weiterhin einen ersten indirekten Wärmetauscher (27) vorsieht, der zum indirekten Aufwärmen von Frischluft (26) mit dem Abgas (20) des ersten Behandlungsabschnitts (I) mit der ersten Frischluftzuführleitung (26) und der ersten Abluft-Abführleitung (21) in Verbindung steht.

6. Vorrichtung nach Anspruch 2, **dadurch gekennzeichnet, dass** das zweite zentrale Aufheizsystem (13) an die erste Zuluft-Zuführeinrichtung (12) angeschlossen ist.

7. Vorrichtung nach Anspruch 1, **dadurch gekennzeichnet, dass** die zweite Abluft-Abführeinrichtung (22) zum Abführen der Abluft (20) aus den Behandlungsfeldern des zweiten Behandlungsabschnitts (II) unter Umgehung eines Wärmetauschers an das erste zentrale Aufheizsystem (11) zur Verwendung der Abluft (20) als Zuluft (15) im ersten Behandlungsabschnitt (I) angeschlossen ist.

8. Vorrichtung nach Anspruch 2, **dadurch gekennzeichnet, dass** die erste und/oder zweite Abluft-Abführleitung (21, 22) über einen ggf. vorhandenen Abluftwärmetauscher (23) und einen ggf. vorhandenen Schadstoff- und/oder Staubfilter an einen Abluftkamin (25) angeschlossen ist.

9. Verfahren zur Wärmebehandlung von bahnförmigen Warenbahnen (6), wobei
- die Warenbahn (6) durch wenigstens einen Behandlungsabschnitt (I, II, I') transportiert wird, wobei der Behandlungsabschnitt jeweils mehrere aufeinander folgende Behandlungsfelder (1-5) aufweist, in denen die Warenbahn (6) mit einem Behandlungsgas (10) beaufschlagt wird,
- einigen, vorzugsweise allen Behandlungsfeldern (1-5) über eine Zuluft-zuführeinrichtung (12; 12') Zuluft (15) zugeführt wird, die in einem zentralen Aufheizsystem (11) aufgeheizt wird,
- die Abluft (20) aus den Behandlungsfeldern (1-5) über eine Abluft-Abführeinrichtung (21, 22; 21') abgeführt wird und
- das Behandlungsgas (10) in jedem Behandlungsfeld (1-5) durch Mischen von Zuluft (15) mit zirkulierender Umluft (16) eingestellt wird,
**dadurch gekennzeichnet, dass** die Abluft (20) der Abluft-Abführeinrichtung (21, 22; 21') dem zentralen Aufheizsystem (11, 13; 11') zum weiteren Aufheizen und zur anschließenden Verwendung als Zuluft (15) in den Behandlungsfeldern zugeführt wird.

10. Verfahren nach Anspruch 9, wobei
- die Warenbahn (6) durch wenigstens einen ersten Behandlungsabschnitt (I) und einen nachfolgenden, zweiten Behandlungsabschnitt (II) transportiert wird, wobei die beiden Behandlungsabschnitte jeweils mehrere aufeinander folgende Behandlungsfelder (1-5) aufweisen, in denen die Warenbahn (6) mit einem Behandlungsgas (10) beaufschlagt wird,
- einigen, vorzugsweise allen Behandlungsfeldern (1-3) des ersten Behandlungsabschnitts (I) über eine erste Zuluft-Zuführeinrichtung (12) Zuluft (15) zugeführt wird, die in einem ersten zentralen Aufheizsystem (11) aufgeheizt wird,
- einigen, vorzugsweise allen Behandlungsfeldern (3-5) des zweiten Behandlungsabschnitts (II) über eine zweite Zuluft-Zuführeinrichtung (14) Zuluft (15) zugeführt wird, die in einem zweiten zentralen Aufheizsystem (13) aufgeheizt wird,
- die Abluft (20) aus den Behandlungsfeldern (1-3) des ersten Behandlungsabschnitts (I) über eine erste Abluft-Abführeinrichtung (21) abgeführt wird,
- die Abluft (20) aus den Behandlungsfeldern (3-5) des zweiten Behandlungsabschnitts (II) über eine zweite Abluft-Abführeinrichtung (22) abgeführt wird,
- das Behandlungsgas (10) in jedem Behandlungsfeld (1-5) durch Mischen von Zuluft (15) mit zirkulierender Umluft (16) eingestellt wird,
- wobei die Abluft (20) einer der beiden Abluft-Abführeinrichtungen (21, 22) einem der beiden zentralen Aufheizsysteme (11, 13) zum weiteren Aufheizen und zur anschließenden Verwendung als Zuluft (15) im zugeordneten Behandlungsabschnitt zugeführt wird.

11. Verfahren nach Anspruch 9, **dadurch gekennzeichnet, dass** die Abluft (20) der ersten Abluft-Abführeinrichtung (21) dem zweiten zentralen Aufheizsystem (13) zum weiteren Aufheizen und zur anschließenden Verwendung als Zuluft (15) im zweiten Behandlungsabschnitt (II) zugeführt wird.

12. Verfahren nach Anspruch 10, **dadurch gekennzeichnet, dass** die Abluft (20) der zweiten Abluft-Abführeinrichtung (22) dem ersten zentralen Aufheizsystem (11) zum weiteren Aufheizen und zur anschließenden Verwendung als Zuluft (15) im ersten Behandlungsabschnitt (I) zugeführt wird.

13. Verfahren nach Anspruch 12, **dadurch gekennzeichnet, dass** die dem ersten zentralen Aufheizsystem (11) zuzuführende Frischluft (26a) mit der Abluft (20) des ersten Behandlungsabschnitts (I) indirekt vorgewärmt wird.

14. Verfahren nach einem der Ansprüche 9 bis 12, **dadurch gekennzeichnet, dass** das zweite zentrale Aufheizsystem (13) mit Brennstoff und einem Teil der im ersten zentralen Aufheizsystem (11) aufgeheizten Zuluft (15) betrieben wird.

15. Verfahren nach einem der Ansprüche 9 bis 13, **dadurch gekennzeichnet, dass** überschüssige Zuluft (15) des zweiten Behandlungsabschnitts (II) zum ersten zentralen Aufheizsystem (11) zurückgeführt wird.
